(19) Europäisches Patentamt
European Patent Office
Office européen des brevets

(11) **EP 2 200 371 B1**

(12) **EUROPEAN PATENT SPECIFICATION**

(45) Date of publication and mention
of the grant of the patent:
**30.07.2014  Bulletin 2014/31**

(51) Int Cl.:
***H04W 40/10*** (2009.01)

(21) Application number: **09179970.0**

(22) Date of filing: **18.12.2009**

(54) **Method for selecting a relay node in a wireless communication system.**

Verfahren zur Auswahl eines Relaisknotens in einem drahtlosen Kommunikationssystem

Procédé de sélection d'un noeud de relais dans un système de communication sans fil

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **18.12.2008  NL 1036326**

(43) Date of publication of application:
**23.06.2010  Bulletin 2010/25**

(73) Proprietor: **THALES NEDERLAND B.V.**
**7550 GD  Hengelo (NL)**

(72) Inventor: **De Graaf, Maurits**
**1077 WR, AMSTERDAM (NL)**

(74) Representative: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) References cited:
**US-A- 5 551 066     US-A1- 2006 002 303**

• **LAKKAVALLI S; SINGH S ED - INSTITUTE OF ELECTRICAL AND ELECTRONICS ENGINEERS: "Using remaining battery lifetime information and relaying to decrease outage probability of a mobile terminal" VEHICULAR TECHNOLOGY CONFERENCE, 2003. VTC 2003-FALL. 2003 IEEE 58TH ORLANDO, FL, USA 6-9 OCT. 2003; 20031006; 20031006 - 20031009 PISCATAWAY, NJ, USA,IEEE, US, vol. 3, 6 October 2003 (2003-10-06), pages 1843-1847, XP010702830 ISBN: 9780780379541**
• **Calinescu, Kapoor, Olshevsky, Zelikovsky: "Network Lifetime and Power Assignment in ad hoc Wireless Networks" Lecture Notes in Computer Science 2832 18 September 2003 (2003-09-18), XP002545250 Retrieved from the Internet: URL:http://www.springerlink.com/ content/ur x4w0rlk628vpw5/fulltext.pdf [retrieved on 2009-09-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method and concomitant system that selects a node to fulfill the role of a relay node in a wireless communication system. The invention applies to mobile radio networks, especially to Personal Mobile Radio networks (PMR).

Wireless personal communication systems as the PMR enable users, for example soldiers, to have situational awareness by exchanging voice and/or data information. Usually, these systems consist of a number of battery powered radio terminals, one of which being designed as a master terminal. Typically, the master terminal sets the frequency used by the nodes to communicate with each other and enables the synchronization between all nodes.

Moreover, in many of these radio systems, the master node acts as a relay node, that is, a node that receives all messages sent by other nodes and re-transmits these messages to remote communication systems. Generally, such a radio system comprises n different transmitting nodes among which w master-designed nodes can be activated as a relay node, a single relay node being active at a given time, all signals generated by other nodes being sent to the relay node. In order to facilitate understanding, even if the radio terminal operating as the relay node can be different from the terminal operating as the master node, the master node terminal is considered hereinafter to be acting as a relay node. When using the radio system, a master-designed node - which is a node embedding the necessary functions to operate alternatively as a slave or as a master node - can be switched to become a slave node, while another master-designed node which was working, until then as a slave node, is switched to act as the master node, other slave nodes remaining slaves.

Now, wireless personal communication systems are battery powered, and it is often difficult, if not impossible, to recharge the batteries during a mission or an event. Also, the choice of which node should act as the master node is crucial for limiting the energy consumption, therefore saving batteries.

Currently, master nodes are pre-configured, and the selection of the master node does neither take into account the remaining battery capacity nor the possibility to vary the transmit power nor the message traffic generated by the radios.

Indeed, in some known systems, the slave nodes can adapt their transmit power in order to reach the master node but the master node always transmits at full power. Other systems like "Terrestrial Trunked Radio" (TETRA) or IEEE 802.11 Wireless LAN (Institute of Electrical and Electronics Engineers 802.11 Wireless Local Area Network) in infrastructure mode have both master and slave terminals transmitting at full power, master nodes being pre-configured without consideration of the remaining energy in batteries. Star topologies exist also in the Zigbee standard of ZigBee Document 053474r17 dated January 17, 2008 and in the related IEEE 802.15.4 standard, entitled "Wireless medium access control and physical layer specifications for low-rate wireless personal area networks", dated May 2003. The master node is here called the 'central' node or 'coordinator'.

The need exists in the art of a very light, easy to operate, and preferably ruggedized personal communication system providing a sufficient level of system availability. In relation to weight and availability, two facets of a same technical problem can be raised: how to increase the mission duration of the person carrying the equipment without increasing the battery weight, and how to decrease the battery weight without shortening the mission duration.

Some known systems implement methods that dynamically select a master node according various criteria, for example on the quality of the connection. As an illustration, a patent delivered for the company Radio Local Area Networks Inc and published under reference US5551066 addresses the dynamic designation of a particular node to act as a master control unit. Further, this patent deals with the automatic configuration of the master node, avoiding manual configuration actions, and also takes into account the fact that the master may not have a line of sight connection with other nodes of the network. The method described in that US patent allows selecting a master node when appropriate and peer-to-peer communication via packet relay. This method aims at traffic quality optimization and yields to an easy to install, self-configuring and high transmission data rate system. However, the remaining battery capacity and the possibility to vary the transmit power are not taken into account.

Another set of methods has been proposed to increase the network lifetime in case the network supports multi-hop communication. In literature the network lifetime problem has been studied in the context of MANETS (Mobile Ad-Hoc NETworks). The limited battery capacity of nodes participating in a MANET leads to a wide variety of research problems related to energy-efficiency. An important objective is to maximize the network lifetime. Mostly, network lifetime is defined to be the time until the first node runs out of energy. Many algorithms have been developed addressing the network lifetime problem in general networks. Closely related to these applications are several approaches to maximize the network lifetime.

Among these approaches, the maximization of the network lifetime for broadcast traffic in general MANET belongs to the "NP-hard" class optimization problem, because of the complexity of a general MANET and the possible set of topologies that could be an optimal solution to the problem. Therefore, the complexity of the problem is reduced by finding optimal solutions in case transmissions originate from a single message source. The following algorithms are related to this network lifetime maximization approach.

A first algorithm that maximizes the static network lifetime is proposed by I. Kang, R. Poovendran in Mobile Networks and Applications 10, pp. 879-89, entitled "Maximizing Network Lifetime of Broadcasting over Wireless Stationary Ad Hoc networks", dated 2005. Their static approach is then generalized to a dynamic one with a periodic tree update strategy.

A second algorithm is disclosed by C.P. Low, L.W. Goh, in Computer Communications 29, pp. 93-103, entitled "On the construction of energy-efficient maximum residual battery capacity broadcast trees in static ad-hoc wireless networks", dated 2005. This algorithm considers the problem of maximizing the minimum residual energy that remains after a broadcast transmission from a specific source.

Also, J. Park and S. Sahni issued an alternative heuristic for determination of the tree with maximum 'critical energy' (minimum residual energy) in 3rd ACS/IEEE International Conference on Computer Systems and Applications, 2005, 2005:1-8, entitled "Maximum lifetime broadcasting in wireless networks", dated 2005.

However, this network lifetime maximization approach is too limited to get useful results for the specific problem addressed here. Indeed, we want to optimize the lifetime of a star-like network comprising several transmit nodes, compared to the previous approach that can only provide optimal solutions in some very specific cases, for example where all nodes have equal battery capacities, and the optimization is fixed to static selection only.

A second approach minimizes the total energy consumption for broadcast traffic. The relation with the lifetime problem is that each broadcast reduces the total capacities of all batteries in the network with the total energy required for that broadcast. The following algorithms deal with this approach.

W. Liang, has proven, in the Proceedings of the International Symposium on Mobile Ad Hoc Networking and Computing (MobiHoc), 112-122, entitled "Constructing minimum-energy broadcast trees in wireless ad hoc networks", dated 2002, that the minimum energy broadcast problem with the objective of minimizing the total transmitted power is NP-hard. M. Cagalj, J. Hubaux and C.Enz proved the same in Proceedings of the Annual International Conference on Mobile Computing and Networking, MOBICOM, p 172-182, entitled "Minimum-energy broadcast in all-wireless networks, NP-completeness and distribution issues", dated 2002.

J.E. Wieselthier, G.D. Nguyen and A. Epremides, issued the "Broadcast Incremental Power" (BIP) algorithm in Proceedings - IEEE INFOCOM, 2: 585-594, entitled "On the construction of energy-efficient broadcast and multicast trees in wireless networks", dated 2000. This algorithm is one of the first algorithms on broadcasting in wireless network with usage of the wireless multicast advantage. Same authors issued variants of this algorithm in Computer Networks, 39 (2): 113-131, entitled "Resource management in energy-limited, bandwidth-limited, transceiver-limited wireless networks for session based multicasting", dated 2002.

The purpose of this total energy consumption for broadcast traffic minimization approach is to select a set of relay nodes so that the network lifetime is maximized. Also, the abovementioned algorithms select multiple relay nodes and do not take into account that, for the considered radio networks, only a single relay node must be selected. For that reason, these algorithms are inadequate; they only limit the total energy that is transmitted. In other words, they produce an upper bound to the lifetime of the network by providing a very crude measure for the network lifetime, which is determined by the node that has the least remaining energy at a certain time. Therefore this approach does not sufficiently increase the network lifetime.

A third approach, related to topology control, is to reduce the number of connections in a network to get a sub-network with desired properties. This reduction can be realized by lowering the transmission power at certain nodes. Hence energy can be saved which makes it mostly possible to prolong the network lifetime. The main issue is to find a topology with fewer connections and consequently less transmit power. However, this approach leads to sub-optimal solutions. Some examples of algorithms applying this approach are given below.

R. Wattenhofer and Z. Zolling issued the distributed algorithm XTC in Proceedings - International Parallel and Distributed Processing Symposium (IPDPS) 2004, entitled "A practical topology control algorithm for ad-hoc networks"18:2969-2976, dated 2004. This algorithm XTC reduces the number of connections in the network without knowing where the nodes are geographically located.

G. Calinescu, S. Kapoor, A. Olshevsky and A. Zelikovsky, disclose a method where the lifetime of the network is maximized taking into account the energy cost to maintain the topology, in Lecture Notes in Computer Science, entitled "Network lifetime and power assignment in ad hoc wireless networks", (2832): 114-126, dated 2003.

Due to the complexity of the problem of selecting relay nodes in a MANET taking into account variable transmit powers in case traffic originates from multiple sources, none of the approaches of the prior art provides an optimal solution. Moreover, the methods described in prior art do not take into account the remaining energy of the batteries

What is desired is a method for increasing the time a wireless communication system can operate with its initial energy supply without increasing the size or capacity of the batteries of said system, said system comprising master-designed and slave-designed terminals, a master-designed terminal being able to act alternately as a slave node and as a master node, a slave-designed terminal being only able to act as a slave node, one single master-designed terminal being chosen to work as a master node at a given time, slave nodes needing to be in contact with the master node in order to be able to communicate.

Accordingly, the present invention provides a method for selecting the relay node in a wireless communication system comprising n different transmitting nodes among which w master-designed nodes can be activated as a relay node, a single relay node being active at a given time, all signals generated by other nodes being sent to the relay node, said method being **characterized in that** it comprises at least the following steps:

- determine the remaining battery energy level of each node ;
- solve a linear program maximizing the sum of times $x_u$ that each master-designed node u should remain the relay node under constraints depending at least on the transmit power needed by each node v when a node u is the relay node, on the message transmission rates of each node, and on said remaining battery energy levels ;
- according to times $x_u$ found previously, select the relay nodes.

The method according to the invention maximizes the communication system lifetime. It may be advantageously applied in PMR systems. The method according to the invention provides a dynamic master node designation and optimal settings of transmission powers based on the remaining battery levels in, and the relative message traffic generated by the nodes. It also solves other problems of prior art. Indeed, the possibility to vary the transmit power is exploited on the full set of possibilities; the method selects only one single relay node at a given time; the method according to the present invention doesn't rely on the fact that there is a single transmitting source but it takes into account the fact that traffic originates from all nodes; and finally, an optimal solution is provided.

In an embodiment of the method according to the invention, solved linear program maximizes the sum of the components of x, x denoting the w-sized searched vector of optimal times $x_u$ that each master-designed node u should remain the relay node under constraints $Ax \leq b$, $x \geq 0$, where A denotes a (n by w) matrix depending on the transmit power needed by each node v when a node u is the relay node, matrix A also depending on the message transmission rates of each node, b denoting the n-sized constraint vector depending on said remaining battery energy levels.

In an embodiment of the method according to the invention, the method also comprises the following step: for each pair of nodes (u, v) where first node u of the pair is the k-th master-designed node among the w master-designed nodes, determine the transmit power $p_u(v)$ needed by the second node v to reach the first node u, set all entries of the k-th column in the matrix A to a value proportional to said power $p_u(v)$, column indexes of the matrix A corresponding to the node u being selected as the relay node, row indexes of the matrix A corresponding to a node v transmitting to the relay node, v ranging over all nodes, $p_u(u)$ being determined as the maximum $p_u(v)$ value, v ranging over all nodes different from node u.

In an embodiment of the method according to the invention, the method also comprises the steps of determining the transmission rate $a_v$ of each transmitting node v, and setting any entry of the v-th row of the matrix A to a value proportional to said transmission rate $a_v$ when the column of said entry does not correspond to a relay node that is the same node as node v.

The constraint matrix may be filled as follows: all entries at the v-th row and the k-th column where the k-th column corresponds to the k-th master-designed node u that is the same node as the transmitting node v of the v-th row, are set to $p_u(v)\sum_{i=1}^{n} a_i$ , all other entries being set to the value $p_u(v).a_v$.

The transmission rate $a_v$ of the node v may be determined: first, by measuring several times the number of transmissions coming from said node v during a time interval T, and second, by calculating the weighted average of the last M measured number of transmissions, $a_v$ being equal to said weighted average.

In an embodiment of the method according to the invention, the linear program solving is repeated with renewed inputs after a time interval U, U being a fraction of the time $x_m$ that the current relay node m should remain as a relay node.

The power strength values $p_u(v)$ may be estimated by the following steps:

- each slave node i reports its position $(x_i, y_i)$ and its transmit power strength $p_m(i)$ to the master node m;
- the master node m calculates the distance dist(m, i) separating itself from each slave node i;
- for each node i, express $p_m(i)$ as a function f() of dist(m,i) and constants values $\alpha_0,..., \alpha_q$; the master node m estimates good values of constants $\alpha_0, \alpha_1,..., \alpha q$, using least square error estimation;
- the master node m computes approximate values for $p_u(v)$ for all u corresponding to master-designed nodes, $u \neq m$ and $u \neq v$, all v ranging from 1 to n, using the estimated constants $\alpha_0,..., \alpha_q$ and the approximate relations $p_u(v) \approx$ f(dist(u,v), $_{\alpha 0},...,\alpha_q)$.

In an embodiment of the method according to the invention, the node chosen to act as the relay node is the node M that should remain the longest time $x_M$ as a relay node, according to optimal times determined from the linear program.

The transmission strength of each master-designed node u may be adapted through the following steps:

- node u sends signals to all other nodes ;
- each of the other nodes reports a received signal strength indicator to the node u;
- node u adapts its transmit power so as to reach all other nodes; if its transmit power is too weak, the transmit power is increased; if its transmit power is unnecessary strong, the transmit power is decreased.

The present invention also provides a wireless communication system comprising n several transmitting nodes among which w master-designed nodes can be activated as a relay node, one single relay node being active at a given time, all messages generated by other nodes sent to the relay node, each node comprising at least a battery level measurement module that sends the battery energy level of that node to the relay node, each master-designed node also comprising a constraint matrix calculation module able to compute a constraint matrix A depending at least on transmit power values and transmission rates of all transmitting nodes, a linear program solver module being able to compute optimal times that each master-designed node should remain as a relay node from said constraint matrix A and said battery energy levels.

The objects, advantages and other novel features of the present invention are apparent from the following detailed description when read in conjunction with the appended claims and attached drawing.

FIG. 1a and 1b are illustrative views of a wireless communication system according to the present invention,
FIG. 2 is a flowchart showing the inputs and the outputs of the method according to the present invention,
FIG. 3 is a flow chart illustrating the main steps of the method according to the present invention,
FIG. 4 is a flow chart showing a method to approximate nodes transmission rates according to the present invention,
FIG. 5 is a flow chart showing a method to adapt nodes transmission strength,
FIG. 6 is a flow chart showing a method to determine a power matrix according to the present invention,
FIG. 7 is a flow chart showing an alternate method to generate a power matrix according to the present invention,
FIG. 8 is a flow chart showing a method to determine battery energy levels of the node,
FIG. 9 is a flow chart showing a method to determine a constraint matrix and solve the linear program according to the present invention,
FIG. 10 is a flow chart showing a method to choose optimally a new master node.

To facilitate understanding, identical reference numerals have been used, where possible, to designate identical elements that are common to the figures.

For the sake of clarity, in the context of the present invention, a relay node is designated by the term 'master node', even if the terminal working as the master node does not fulfill all the usual roles allocated to a master node, like setting the frequency used by the nodes to communicate with each other or synchronize the nodes.

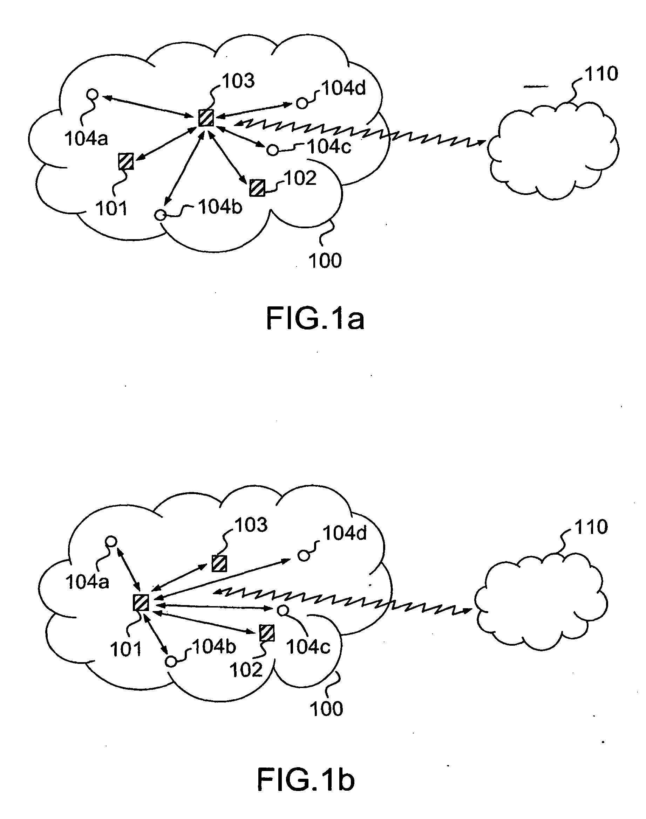

Referring to FIG. 1a, there is shown an illustrative view of a wireless communication system according to the present invention. The system 100 comprises master-designed terminals 101, 102, 103 and slave-designed terminals 104a, 104b, 104c, 104d. The master-designed terminals 101, 102, 103 embed the necessary functions to operate alternatively as a slave or as a master node, whereas the slave-designed terminals 104a, 104b, 104c, 104d only embed the necessary functions to operate as a slave node. At a given time, one single terminal 103 is designated to act as a master node among the master-designed terminals 101, 102, 103. Then, each of the other terminals 101, 102, 104a, 104b, 104c, 104d behaves as a slave node by exchanging messages only with the master node 103. Also, in the described example, the system 100 communicates with a remote communication network 110 via the master node 103. For the following description, we assume all terminals embed the necessary functions to operate as a slave node.

After a period of time, the master node 103 is changed, as illustrated in FIG. 1b, where another master-designed terminal 101 is chosen to operate as a master node. The time the system 100 can operate with its initial energy supply, hereinafter called 'system lifetime', depends on how long each master-designed terminal 101, 102, 103 is designated as the master node, the battery levels at each node at system start, the relative message traffic generated by the nodes, and on how much power is allocated to each transmit node.

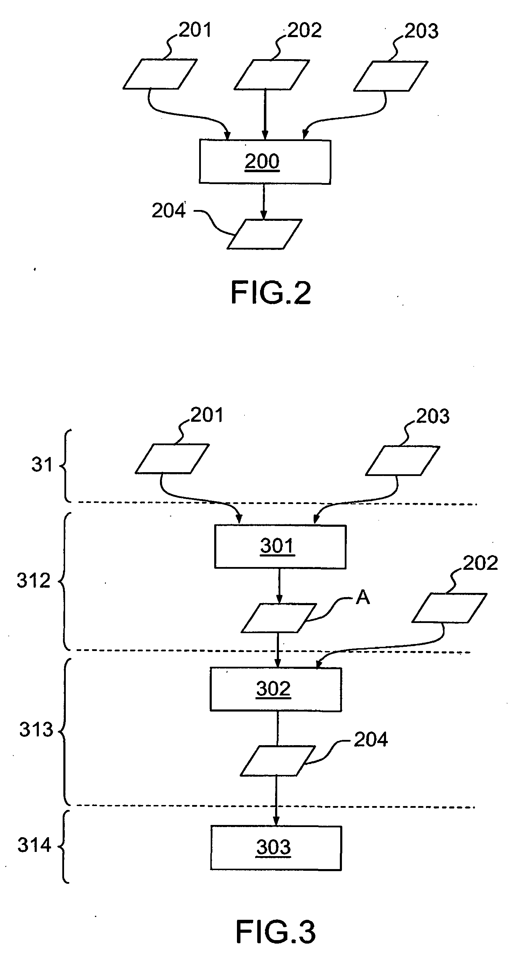

Referring now to FIG. 2, there is shown a flowchart illustrating inputs and outputs of the method according to the present invention. The method 200 applies to a wireless communication system like the one shown in FIG.1a and takes, in the example of FIG. 2, three inputs. The first input 201 is, for each transmitting node of the system, the relative number of messages per time unit at which that node transmits a message. The second input 202 is, for each node, the remaining battery level of the node. This energy level is known from the node itself. The third input 203 is a transmission power matrix, which contains the power assigned to a specific node (say node number i) when another node (say node number j) is activated as the master node. The method 200 produces, as an output 204, a set of nodes with corresponding optimal times indicating how long each of these nodes should be activated as the master.

FIG. 3 is a flow chart illustrating the main steps of the method according to the present invention.

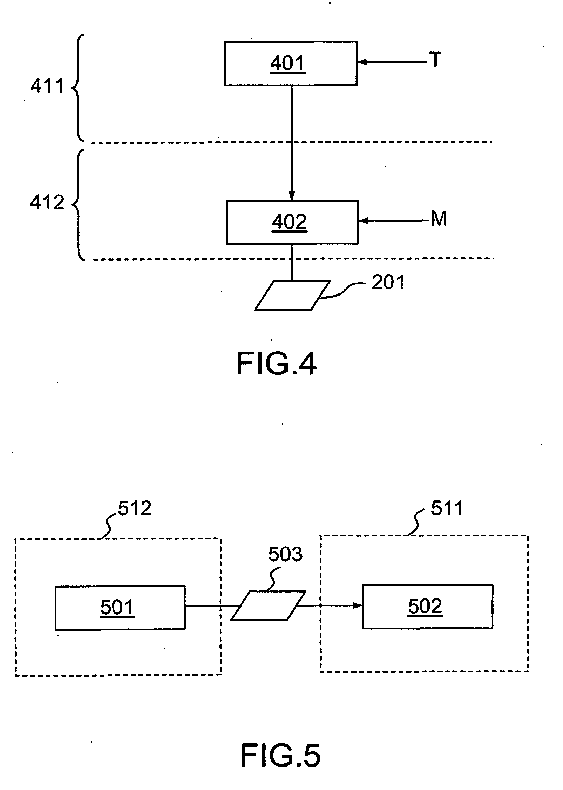

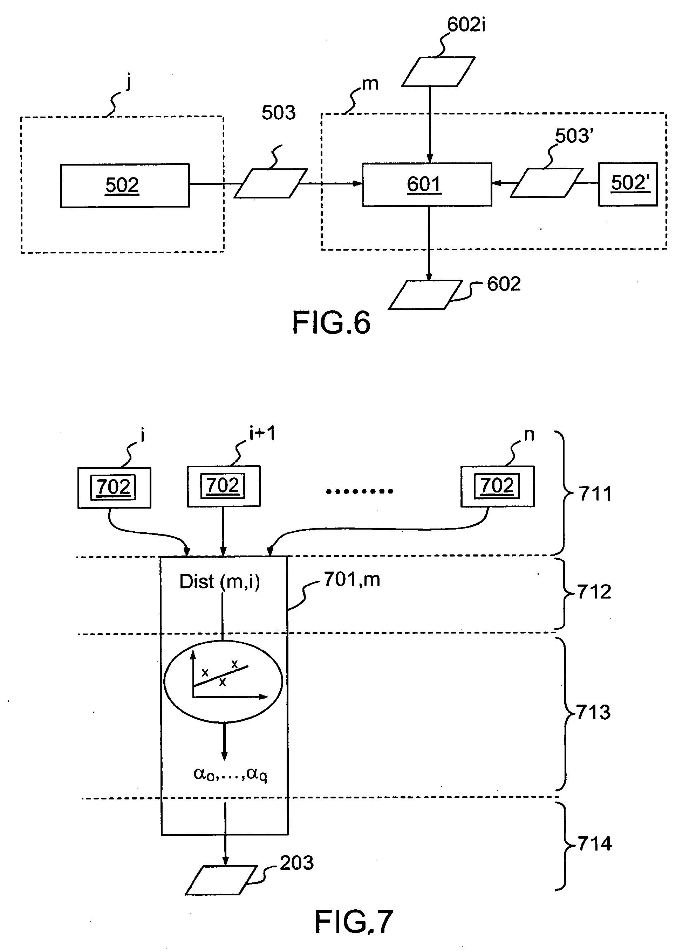

First 311, the relative frequency 201 at which each node transmit a message is determined. This frequency can be provided as a user input, if that user can estimate by advance the transmission rate of a node, that rate being for example deduced from his/her previous experiences. The relative frequency can also be approximated by a method such as the one detailed below in FIG. 4. Also during the first step 311, the transmission power matrix 203 is determined. This transmission power matrix 203 can be provided as a user input, or it can be determined or approximated by an automatic method such as the one detailed below in FIG. 6.

Second 312, a constraint matrix A301 is calculated from the relative frequencies 201 and the power transmission matrix 203. This constraint matrix A is fed to a linear program solver 302. In the meantime of this second step 312, the remaining battery energy levels 202 of the nodes are also provided to the linear program solver 302.

Third 313, from both the remaining battery energy levels 202 and the constraint matrix A, the linear program solver 302 produces the optimal times 204 indicating how long each master-designed terminal should be activated as a master node.

Fourth 314, from the knowledge of optimal times 204, a master node can be selected optimally 303 among the master-designed terminals.

FIG. 4 is a flow chart showing a method to approximate nodes relative message transmission rates according to the present invention in case these are not given as a user input.

In the present embodiment, master-designed nodes 101, 102, 103 (see FIG. 1a) comprise a measurement module 401 and a node transmission frequency calculation module 402. The node transmission rates are preferably calculated in two steps, the first step 411 being completed by the measurement module 401 and the second step 412 being performed by the node transmission frequency calculation module 402.

When a master-designed node becomes a master, the measurement module 401 is activated and it measures the number of transmissions coming from a node of the communication system during a time interval T, this value T being preferably configured by system users. When a new transmission from a node with a certain node ID is detected during the time interval T, the number of transmissions for that node ID is increased. Then, at each new T time interval these numbers are reset. At the end of each time interval T, the measurement numbers are reported to the node transmission frequency calculation module 402, for example, as a set of node IDs and numbers of measured transmissions. The set of node IDs and numbers of transmissions is designated hereinafter by the expression 'measurement values'.

An example of one set of measurement values for system 100 (see FIG. 1a) is given in the table below:

| NODE ID | Measurement value |
|---------|-------------------|
| 101 | 51 |
| 102 | 24 |
| 103 | 29 |
| 104a | 8 |
| 104b | 32 |
| 104c | 14 |
| 104d | 38 |

The node transmission frequency calculation module 402, active only in the master node, calculates the weighted average of the last M measurement values transmitted by the measurement module 401, where M is preferably a configured value. When less than M values are available, the average is taken over the all received measurement values. The output 201 provided by the node transmission frequency calculation module 402, consisting of a preferably ordered set of node IDs and averaged measurement values is called 'node transmission frequencies' and denoted $a_k$, k ranging from 1 to n, n denoting the total number of nodes in the system 100.

An example of a multiple set of measurement values MV1, MV2, MV3, MV4, MV5 and the resulting node transmission frequencies $a_k$ when M is equal to five are given in the table below:

| NODE ID | MV1 | MV2 | MV3 | MV4 | MV5 | $a_k$ |
|---------|-----|-----|-----|-----|-----|-------|
| 101 | 51 | 45 | 48 | 55 | 49 | $a_{101} = 49.6$ |
| 102 | 24 | 28 | 20 | 26 | 25 | $a_{102} = 24.6$ |
| 103 | 29 | 29 | 30 | 31 | 31 | $a_{103} = 30$ |
| 104a | 8 | 15 | 9 | 10 | 13 | $a_{104a} = 11$ |

(continued)

| NODE ID | MV1 | MV2 | MV3 | MV4 | MV5 | $a_k$ |
|---|---|---|---|---|---|---|
| 104b | 32 | 26 | 26 | 26 | 34 | $a_{104b} = 28.8$ |
| 104c | 14 | 16 | 14 | 18 | 18 | $a_{104c} = 16$ |
| 104d | 38 | 39 | 35 | 34 | 37 | $a_{104d} = 36.6$ |

Parallel and independently to all other processes of the method according to the invention, a process is preferably launched to adapt the transmit power values of all nodes as shown in FIG. 5.

FIG. 5 is a flow chart showing a method to adapt nodes transmission strength. The optimal transmit power setting is calculated in such a way that, at each time instant, the master node can reach all nodes, and that each slave node can reach the master node.

This can be described in two steps. Let $p_m(j)$ denote the transmit power assigned to node j when node m is activated as a master node. The aim of the transmission strength adaptation module 502 is to determine the optimal values of $p_m(j)$, for a specific master node m, and all nodes j.

First we determine $p_m(j)$ for a specific master-node m and slave nodes j, with $j \neq m$. In the present embodiment, slave-designed nodes 104a, 104b, 104c, 104d and master-designed nodes 101, 102, 103 (referring to FIG. 1a) comprise a Relative Signal Strength Indicator (RSSI) module 501 and a transmission strength adaptation module 502. The RSSI module 501 of a receiving node is used to detect whether the signals received by that first node are strong enough or too strong. If that receiving node reports that the received signals are not strong enough (respectively unnecessarily strong), then the transmission strength of the sending node is increased (respectively decreased) via the transmission strength adaptation module 502.

Second, the transmission strength adaptation module 502 determine the optimal values of $p_m(m)$ for all master-designed nodes m.

Firstly, a first node 511 (assumed to be a master node) sends a message to a second node 512 (assumed to be slave node). Secondly, the RSSI module 501, comprised in the second node 512, reports the received signal strength 503 to the first node 511. The indicated signal strength value 503 is, for example, appended to the messages that are transmitted back to the first node 511 by the second node 512. These two steps are repeated with other nodes; that is to say, the first node 511 sends messages to other nodes, which send back their corresponding received signal strength value to the first node 511. Thirdly, the transmission strength adaptation module 502 comprised by the first node 511 adapts the transmission strength based on all received signal strength values. If one or several nodes indicate that their received signal strength values are too low (respectively too high) for proper receptions, the transmission strength is increased (respectively decreased) until all nodes report a sufficient signal strength level. The slave nodes 512 report their final transmission strength back to the master node 511.

Parallel to the previous steps of calculating the message transmission rates (see FIG. 4) and adapting the transmission strength (see FIG. 5), the transmission power matrix 203 is determined. This power matrix 203 may be provided as a user input, or it could be exactly determined using the method described below in FIG. 6.

FIG. 6 is a flow chart showing a method to determine a power matrix according to the present invention in case power matrix is not given as a user input.

Every master-designed terminal comprises a power matrix determination module 601. At the startup of the system, or triggered by a master update time interval U, each master-designed terminal m becomes a 'temporary master node' for a short period that is, however, long enough to determine the entries $p_m(j)$ of the power matrix 203 for all nodes j=1,...,n, where n is the number of nodes in the communication system. The master update time interval U is preferably chosen so as to correspond to the probability of changes in transmission conditions (due for example to weather change) and/or changes in the relative positions of the nodes. In the present embodiment, this time interval U is set to a fraction of the optimal time $x_i$ the node i should remain the master.

Let M denote the set of all master-designed terminals, M being a subset of {1,...,n} where n is the number of nodes in the communication system. When node m is a temporary master, m $\varepsilon$ M, the entries $p_m(j)$ of the power matrix 203 for all nodes j=1,...,n are calculated as follows. From the perspective of the temporary master node m, each slave node j reports its transmission strength 503 to the power matrix determination module 601, so the master node m has access to $p_m(j)$ for all nodes j, $j \neq m$. Besides, the power matrix determination module 601 of the temporary master node m receives from its own transmission strength adaptation module 502' the value 503' of $p_m(m)$. When all the entries $p_m(j)$ for j=1,...,n have been determined, a partial power matrix 602 can be output.

Then, another node - for example, the next higher indexed master-designed node - is selected as temporary master and receives the partial power matrix 602 as input from the previous temporary master node m, the same manner as the previous temporary master node m received a partial power matrix 602i from its preceding temporary master node. When every master-designed terminal has been selected as a temporary master node at least once, the power matrix 203 is complete.

In an alternate embodiment of the present invention, the power matrix 203 may be provided as a user input. In still another embodiment, the power matrix is approximated, as explained below in FIG. 7.

FIG. 7 is a flow chart showing an alternate method to generate a power matrix according to the present invention. Indeed, when positioning information is available for all terminals of the communication system, it is possible to get a quicker determination of the power matrix 203 by deriving an approximate power law, without applying the method of FIG. 6. To do this, a power matrix approximation module 701, a positioning module 702 are needed as well as a form of the formula relating transmit power to distance. For example, for each node i, it is considered that $p_m(i)$ is equal to $\alpha_0 + \alpha_1 \, dist(m,i) + \alpha_2 \, dist(m,i)^2 + ... + \alpha_p \, dist(m,i)^q$, where $\alpha_0,..., \alpha_q$ are constant values.

The positioning module 702 is comprised by all terminals. The positioning module 702 reports to the master node its position, which is defined in the example by an x-coordinate and a y-coordinate. For example, the positions are reported periodically according to the master update time interval U, or more often.

Every master-designed terminal comprises the power matrix approximation module 701. To approximate $p_m(i)$ values when $i \neq m$, the following steps are performed.

First 711, each slave node i reports its position $(x_i, y_i)$ as well as its transmit power strength $p_m(i)$ to the master node m.

Second 712, knowing the relative position of each node, the master node m calculates the distance $dist(m,i)$ separating itself from each slave node i.

Third 713, $p_m(i)$ is expressed as a function f() of $dist(m,i)$. From these n relations, the master node m estimates good values constants $\alpha_0, \alpha_1,..., \alpha_q$, using least square error estimation.

Fourth 714, the master node m computes approximate values for $p_u(v)$ for all $u \neq m$, $u \, \varepsilon \, M$, $u \neq v$, and all $v=1,...,n$ using the estimated values $\alpha_0,..., \alpha_q$ and the approximate relations $p_u(v) \approx f(dist(u,v), \alpha_0,...,\alpha_q)$, which, in the example correspond to:

$$p_u(v) \approx \alpha_0 + \alpha_1 \, dist(u,v) + \alpha_2 \, dist(u,v)^2 + ... + \alpha_p \, dist(u,v)^q$$

Also, the master node m calculates the elements $p_u(u)$ as the maximum of $p_u(v)$, for v ranging from 1 to n, which means that the power assigned to node u, when node u is master, is chosen so that node u can reach all other nodes. The power matrix 203 can thus be generated from all the $p_u(v)$ determined.

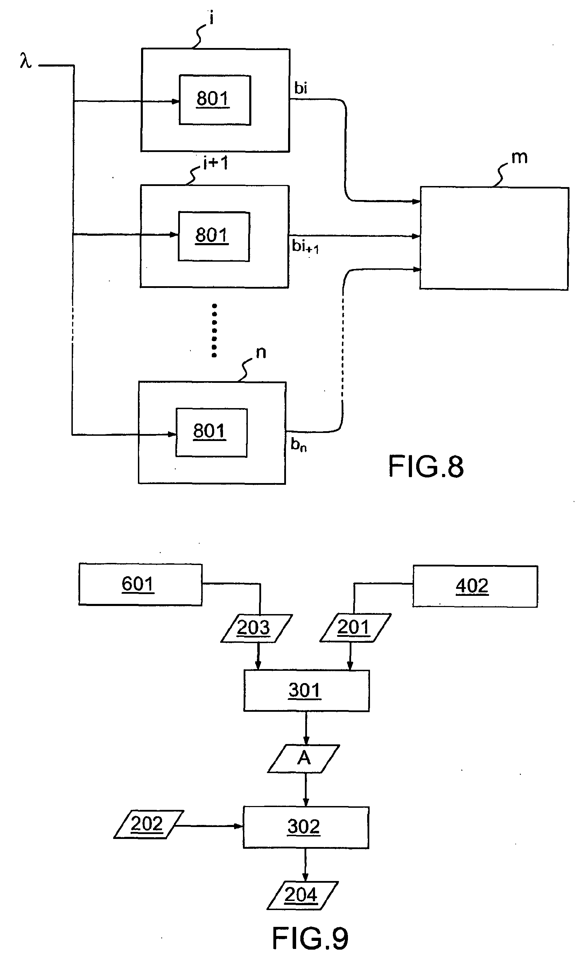

FIG. 8 is a flow chart showing a method to determine battery energy levels of the node.

In the present embodiment, every terminal comprises a battery level measurement module 801 that measures the remaining battery capacity $B_i$ of the current node, divides this $B_i$ value by a constant $\lambda$ and outputs the resulting value $b_i$ for each node. The constant $\lambda$ relates battery reduction to transmit power. The battery level measurement module 801 is triggered by the master update time interval U. All slave nodes i send their $b_i$ value to the master node m, which collects these battery values.

Now that the power matrix 203 and the nodes transmission rates 201 are determined, a constraint matrix may be calculated, as detailed below in FIG. 9.

FIG. 9 is a flow chart showing a method to determine a constraint matrix and solve the linear program according to the present invention.

Master-designed terminals comprise a matrix calculation module 301 and a linear program solver module 302. When one of these terminal acts as the master node, the matrix calculation module 301 receives $p_i(j)$ values 203 from the power matrix determination module 601 (see FIG. 6) and the node transmission frequencies $a_k$ 201 from the node transmission frequency module 402 (see FIG. 4). The matrix calculation module 301 then outputs a constraint matrix A of size (n x |M|), n designating the number of nodes in the system, the matrix A being filled as follows:

$$A_{i,index(m)} = \begin{cases} p_m(i) \cdot a_i & \text{if } m \, \varepsilon \, M \text{ and } i \neq m \\ p_m(m) \sum_{k=1}^{n} a_k & \text{if } m \, \varepsilon \, M \text{ and } i=m \end{cases}$$

where index(m) is a function providing the index of terminal m in M, that is, index(m) is equal to k if m is the k-th master-designed node of M.

The matrix A is a matrix A sizing (n x w), where w is the number of master-designed terminals among the n terminals. As an illustration, if a communication system comprises seven nodes among which three are master-designed terminals (in the example M={1,4,5} so nodes with IDs 1, 4, and 5 are master-designed) and four nodes are slave-designed terminals (nodes with IDs 2, 3, 6 and 7), the resulting constraint matrix A would look like below.

$$A = \begin{bmatrix} p_1(1)\sum a_i & p_4(1)\cdot a_1 & p_5(1)\cdot a_1 \\ p_1(2)\cdot a_2 & p_4(2)\cdot a_2 & p_5(2)\cdot a_2 \\ p_1(3)\cdot a_3 & p_4(3)\cdot a_3 & p_5(3)\cdot a_3 \\ p_1(4)\cdot a_4 & p_4(4)\sum a_i & p_5(4)\cdot a_4 \\ p_1(5)\cdot a_5 & p_4(5)\cdot a_5 & p_5(5)\sum a_i \\ p_1(6)\cdot a_6 & p_4(6)\cdot a_6 & p_5(6)\cdot a_6 \\ p_1(7)\cdot a_7 & p_4(7)\cdot a_7 & p_5(7)\cdot a_7 \end{bmatrix}$$

Indeed, the value w being equal to the size of M, which is three in the example, it leads to a (7 x 3) matrix A. The v-th row of A corresponds to the v-th terminal among all n terminals of the communication system and the k-th column of A corresponds to the k-th master-designed terminal of set M (not the k-th terminal among all n terminals).

Meanwhile, the remaining battery energy levels 202 are determined for all nodes and collected to the master node, as explained above in FIG. 8.

Then, the constraint matrix A and the remaining battery energy levels 202 are provided to the linear program solver module 302 which finds the maximum value of the linear programming problem defined by the constraint matrix A and the vector denoting the remaining energy b=$(b_1,...,b_n)^T$.

The linear program solver module 302, which may be a standard linear programming module, computes an optimal solution 204 denoted x = $(x_{i1},...,x_{iw})^T$ for the linear programming problem, where $\{i_1,... ,i_w\}$ denote the indices in the set of master-designed nodes M. The optimization problem is defined as max $\sum_{j\in M} x_j$ under constraints x $\geq$ 0 and Ax $\leq$ b. A value $x_i$ then corresponds to the optimal time that node i should remain the master node in order to get the longest system lifetime. Then, when taking the previous example, the linear problem to solve would be expressed as follows:

find max($x_1 + x_4 + x_5$) with

$$\begin{bmatrix} p_1(1)\sum a_i & p_4(1)\cdot a_1 & p_5(1)\cdot a_1 \\ p_1(2)\cdot a_2 & p_4(2)\cdot a_2 & p_5(2)\cdot a_2 \\ p_1(3)\cdot a_3 & p_4(3)\cdot a_3 & p_5(3)\cdot a_3 \\ p_1(4)\cdot a_4 & p_4(4)\sum a_i & p_5(4)\cdot a_4 \\ p_1(5)\cdot a_5 & p_4(5)\cdot a_5 & p_5(5)\sum a_i \\ p_1(6)\cdot a_6 & p_4(6)\cdot a_6 & p_5(6)\cdot a_6 \\ p_1(7)\cdot a_7 & p_4(7)\cdot a_7 & p_5(7)\cdot a_7 \end{bmatrix} \cdot \begin{bmatrix} x_1 \\ x_4 \\ x_5 \end{bmatrix} \leq \begin{bmatrix} b_1 \\ b_2 \\ b_3 \\ b_4 \\ b_5 \\ b_6 \\ b_7 \end{bmatrix} \quad \text{and} \quad \begin{aligned} x_1 &\geq 0 \\ x_4 &\geq 0 \\ x_5 &\geq 0 \end{aligned}$$

In another embodiment of the method according to the invention, the transmission rates $a_k$ are not taken into account in the programming problem, which corresponds to the specific case defined by

$$\forall i, \forall j \quad a_i = a_j$$

In case a full implementation of a linear program solver is too heavy, due, for example, to processing power and/or memory restrictions of certain nodes, an alternative method yielding an approximate solution to the linear programming problem can be used. In this case the linear program solver module 301 needs to be replaced by an approximate linear program solver module which computes $x_{i1},...,x_{iw}$ as follows:

$$\forall i \in M \quad x_i = \min\left\{ \frac{b_i}{p_i(i) \cdot \sum_{i=1}^{n} a_i}, \frac{b_j}{a_j \cdot p_i(j)} \forall j \neq i \right\}$$

Now that for each node, it is known how long it should remain a master node, the aim is to minimize the number of switches from one master to another and the number of linear programs to be solved.

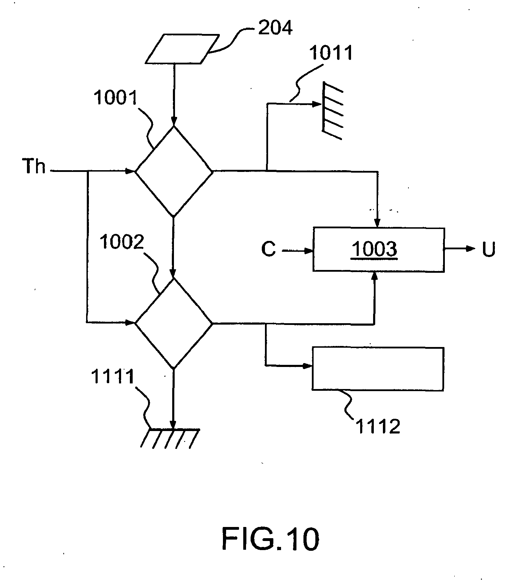

FIG. 10 is a flow chart showing a method to choose optimally a new master node; in other words, to switch optimally from a master node to another. This choice is not relevant in case the system is static. However, in practice, the transmission conditions are almost always changing over time.

In the present embodiment, all master-designed terminals comprise a comparing module 1001, a master assignment module 1002 and a master update time interval calculation module 1003.

First, the comparing module 1001 compares the optimal time $x_m$ during which the master node m should remain master with a threshold value Th, that threshold value being for example provided as a user input.

If $x_m > Th$, the master node remains the same 1011, and the master update interval is re-calculated via the master update interval calculation module 1003 as follows. The master update interval calculation module 1003 receives the value $x_m$ and calculates a new master update interval U as $U = C x_m$, C being a value comprised between 0 and 1, provided for example as a user input. The time interval U is thus a fraction of the duration $x_m$.

If $x_m \leq Th$, the new master assignment module 1002 assigns a new master node for the communication system. The new master node chosen is the node u such that $x_u = \max\{x_1,...,x_n\}$, provided that $x_u \geq Th$. If $x_u < Th$, no new master node is assigned, situation referred 1111 on FIG. 10; otherwise 1112 a trigger signal is sent to all other nodes indicating that node u is the new master node.

One of the main benefits of the method according to the invention is that the total lifetime of the radio network is significantly extended - about two or three times longer - compared to the prior art networks that include a configured master node.

Conversely, to reach the same network lifetime, the needed battery capacity can be significantly reduced, which is highly relevant in portable communication systems because batteries usually account for about half the volume and 35% of the weight of a radio terminal. Halving the number of batteries thus leads to a volume reduction of 25% of the terminal and a weight reduction of at least 15%.

Another advantage provided by the method according to the invention is the automatic master selection without user intervention via a lightweight protocol. At the same time, the number of network reconfigurations achieved to get the maximum lifetime is minimized. This addresses the main user concerns for portable communication systems: auto-configuration and system availability.

Another advantage of the method according to the invention is that it deals with the fact that remaining battery levels at each node and transmit power strength needed by the nodes will vary over time. The method takes into account mobility of the nodes in the network by regularly re-evaluating the optimal master choice, and maximizes the system availability by minimizing the number of changes from one master to another.

The method according to the invention may be used in communication systems, for example voice radios or voice and data radios, that need some master radio node. The method is preferably implemented in systems that need to save battery energy, such as personal mobile radio systems. Yet, the method according to the invention may also be applied to vehicle radios when, for example, the vehicles need to operate in silent mode, which means that their batteries cannot be recharged.

The method according to the invention may also be applied in portable Terrestrial Trunked Radio (TETRA) systems, and also in IEEE 802.11 communication systems in infrastructure mode, when there are multiple access points to choose from and when the access point functionality is implemented on a node with minimal energy resources. The method according to the invention can also be applied with the Zigbee and 802.15.4 communication protocols in the star topology.

**Claims**

1. Method for selecting a relay node in a wireless communication system CL-(100) comprising n different transmitting nodes among which w master-designed nodes (101,102,103) can be activated as a relay node, a single relay node being active at a given time, all signals generated by other nodes (104a, 104b, 104c, 104d) being sent to the relay node, said method being **characterized in that** it comprises at least the following steps:

- determine the remaining battery energy level (202) of each node ;
- solve (313) a linear program maximizing the sum of times $x_u$ that each master-designed node u should remain the relay node under constraints depending at least on the transmit power needed by each node v when a master-designed node u is the relay node, on the message transmission rates of each node, and on said remaining battery energy levels ;
- according to times $x_u$ found previously, select (314) the relay nodes.

2. Method according to claim 1, **characterized in that** solved linear program (313) maximizes the sum of the components of x, x denoting the w-sized searched vector of optimal times $x_u$ that each master-designed node u should remain the relay node under constraints $Ax \leq b, x \geq 0$, where A denotes a (n by w) matrix depending on the transmit power needed by each node v when a node u is the relay node, matrix A also depending on the message transmission rates of each node (201), b denoting the n-sized constraint vector depending on said remaining battery energy levels.

3. Method according to claim 2, **characterized in that** it also comprises the following step: for each pair of nodes (u, v) where first node u of the pair is the k-th master-designed node among the w master-designed nodes, determine the transmit power $p_u(v)$ needed by the second node v to reach the first node u, set all entries of the k-th column in the matrix A to a value proportional to said power $p_u(v)$, column indexes of the matrix A corresponding to the node u being selected as the relay node, row indexes of the matrix A corresponding to a node v transmitting to the relay node, v ranging over all nodes, $p_u(u)$ being determined as the maximum $p_u(v)$ value, v ranging over all nodes different from node u.

4. Method according to claim 2 or 3, **characterized in that** it also comprises the steps of determining the transmission rate $a_v$ of each transmitting node v, and setting any entry of the v-th row of the matrix A to a value proportional to said transmission rate $a_v$ when the column of said entry does not correspond to a relay node that is the same node as node v.

5. Method according to claim 4, **characterized in that** the constraint matrix is filled as follows: all entries at the v-th row and the k-th column where the k-th column corresponds to the k-th master-designed node u that is the same node as the transmitting node v of the v-th row, are set to

$$p_u(v)\sum_{i=1}^{n} a_i$$ ,all other entries being set to the value $p_u(v).a_v$.

6. Method according to claim 5, **characterized in that** the power strength values $p_u(v)$ are estimated by the following steps:

- each slave node i reports its position $(x_i, y_i)$ and its transmit power strength $p_m(i)$ to the master node m;
- the master node m calculates the distance dist(m, i) separating itself from each slave node i;
- for each node i, express $p_m(i)$ as a function f() of dist(m,i) and constants values $\alpha_0,..., \alpha_q$; the master node m estimates good values constants $\alpha_0, \alpha_1, ... , \alpha_q$, using least square error estimation;
- the master node m computes approximate values for $p_u(v)$ for all u corresponding to master-designed nodes, $u \neq m$ and $u \neq v$, all v ranging from 1 to n, using the estimated constants $\alpha_0,..., \alpha_q$ and the approximate relations $p_u(v) = f(dist(u,v), \alpha_0,...,\alpha_q)$.

7. Method according to claim 1 or 2, **characterized in that** the linear program solving is repeated with renewed inputs after a time interval U, U being a fraction of the time $x_m$ that the current relay node m should remain as a relay node.

8. Method according to claim 1 or 2, **characterized in that** the transmission rate $a_v$ of the node v is determined: first, by measuring several times the number of transmissions coming from said node v during a time interval T, and second, by calculating the weighted average of the last M measured number of transmissions, $a_v$ being equal to said weighted average.

9. Method according to claim 1 or 2, **characterized in** the node chosen to act as the relay node is the node M that should remain the longest time $x_M$ as a relay node, according to optimal times determined from the linear program.

10. Method according to claim 1 or 2, **characterized in that** the transmission strength of each master-designed node u is adapted through the following steps:

- node u sends signals to all other nodes ;
- each of the other nodes reports a received signal strength indicator to the node u;
- node u adapts its transmit power so as to reach all other nodes; if its transmit power is too weak, the transmit power is increased; if its transmit power is unnecessary strong, the transmit power is decreased.

11. Wireless communication system (100) comprising n several transmitting nodes among which w master-designed nodes (101, 102, 103) can be activated as a relay node, one single relay node being active at a given time, all messages generated by other nodes (104a, 104b, 104c, 104d) being sent to the relay node, the system being **characterized in that** each node comprises at least a remaining battery level measurement module (801) that sends the battery energy level of that node to the relay node, each master-designed node also comprising a constraint matrix calculation module (301) able to compute a constraint matrix A depending at least on transmit power values and transmission rates of all transmitting nodes, a linear program solver module (302) being able to compute optimal times that each master-designed node should remain as a relay node from said constraint matrix A and said remaining battery energy levels.

**Patentansprüche**

1. Verfahren zum Auswählen eines Relaisknotens in einem drahtlosen Kommunikationssystem (100), n verschiedene Sendeknoten umfassend, unter denen w Masterdesign-Knoten (101, 102, 103) als ein Relaisknoten aktiviert werden können, wobei ein einzelner Relaisknoten zu einer gegebener Zeit aktiv ist, wobei alle von anderen Knoten (104a, 104b, 104c, 104d) erzeugte Signale dem Relaisknoten gesendet werden, wobei das Verfahren **dadurch gekennzeichnet ist, dass** es mindestens die folgenden Schritte umfasst:

Bestimmen des verbleibenden Batterieenergieniveaus (202) eines jeden Knotens;
Lösen (313) eines linearen Programmierungsproblems, das die Summe von Zeiten $x_u$, zu denen jeder Masterdesign-Knoten u der Relaisknoten bleiben sollte, unter Restriktionen maximiert, die mindestens von Folgenden abhängen: von der Sendeleistung, die von jedem Knoten v benötigt wird, wenn ein Masterdesign-Knoten u der Relaisknoten ist, von den Nachrichtensenderaten eines jeden Knotens und von den verbleibenden Batterieenergieniveaus;
die Relaisknoten gemäß vorhergehend gefundenen Zeiten $x_u$ auswählen (314).

2. Verfahren nach Anspruch 1, **dadurch gekennzeichnet, dass** das gelöste lineare Programmierungsproblem (313) die Summe der Komponenten von x, wo x den gesuchten w-Größe-Vektor optimaler Zeiten $x_u$ bezeichnet, zu denen jeder Masterdesign-Knoten u der Relaisknoten bleiben sollte, unter den Restriktionen $Ax \leq b$, $x \geq 0$ maximiert, wo A eine (n durch w)-Matrix bezeichnet, die von der von jedem Knoten v benötigten Sendeleistung abhängt, wenn ein Knoten u der Relaisknoten ist, wobei die Matrix A auch von den Nachrichtensenderaten eines jeden Knotens (201) abhängt, wo b den n-Größe-Restriktionsvektor bezeichnet, der von den verbleibenden Batterieenergieniveaus abhängt.

3. Verfahren nach Anspruch 2, **dadurch gekennzeichnet, dass** es auch den folgenden Schritt umfasst: für jedes Paar von Knoten (u, v), wo der erste Knoten u des Paares der k-te Masterdesign-Knoten unter den w Masterdesign-Knoten ist, die Sendeleistung $p_u(v)$ bestimmen, die vom zweiten Knoten v benötigt wird, um den ersten Knoten u zu erreichen, alle Elemente der k-ten Spalte der Matrix A gleich einem Wert setzen, der der Leistung $p_u(v)$ proportional ist, wobei Spaltenindizes der Matrix A dem Knoten u entsprechen, der als der Relaisknoten auswählt wird, die Zeilenindizes der Matrix A einem Knoten v entsprechen, der an den Relaisknoten sendet, wo v über alle Knoten variiert, $p_u(u)$ als der maximale $p_u(v)$-Wert bestimmt wird, wobei v über alle vom Knoten u verschiedenen Knoten variiert.

4. Verfahren nach Anspruch 2 oder 3, **dadurch gekennzeichnet, dass** es auch die folgenden Schritte umfasst: Bestimmen der Senderate $a_v$ eines jeden Sendeknotens v und Setzen eines Elements der v-ten Zeile der Matrix A gleich einem Wert, der der Senderate $a_v$ proportional ist, wenn die Spalte des Elements keinem Relaisknoten entspricht, der derselbe Knoten ist wie Knoten v.

5. Verfahren nach Anspruch 4, **dadurch gekennzeichnet, dass** die Restriktionsmatrix wie folgt besetzt ist: alle Elemente der v-ten Zeile und der k-ten Spalte, wo die k-te Spalte dem k-ten Masterdesign-Knoten u entspricht, der derselbe Knoten ist wie der Sendeknoten v der v-ten Zeile, werden gleich

$$p_u(v) \sum_{i=1}^{n} a_i$$ gesetzt, alle anderen Elemente werden gleich dem Wert $p_u(v).a_v$ gesetzt.

6. Verfahren nach Anspruch 5, **dadurch gekennzeichnet, dass** die Leistungsstärkewerte $p_u(v)$ durch die folgenden Schritte geschätzt werden:

> jeder Slave-Knoten i meldet dem Master-Knoten m seine Position $(x_i, y_i)$ und seine Sendeleistungsstärke $p_m(i)$ ; der Master-Knoten m berechnet die Entfernung dist(m, i), die zwischen ihm und jedem Slave-Knoten i liegt; für jeden Knoten i, $p_m(i)$ als eine Funktion f() der dist(m, i) und konstanter Werte $\alpha_0,..., \alpha_q$ ausdrücken; der Master-Knoten m schätzt gute Werte für die Konstanten $\alpha_0$, $\alpha_1,..., \alpha_q$ unter Verwendung der Methode der kleinsten Quadrate;
> der Master-Knoten m berechnet angenäherte Werte für $p_u(v)$ für alle Masterdesign-Knoten entsprechenden u, mit $u \neq m$ und $u \neq v$, wobei alle v von 1 bis n laufen, unter Verwendung der geschätzten Konstanten $\alpha_0,..., \alpha_q$ und der angenäherten Relationen $p_u(v) \approx f(dist(u,v), \alpha_0,..., \alpha_q)$.

7. Verfahren nach Anspruch 1 oder 2, **dadurch gekennzeichnet, dass** das Lösen des linearen Programmierungsproblems mit aktualisierten Eingaben nach einem Zeitintervall U wiederholt wird, wobei U ein Bruchteil der Zeit $x_m$ ist, zu der der gegenwärtige Relaisknoten m als ein Relaisknoten bleiben sollte.

8. Verfahren nach Anspruch 1 oder 2, **dadurch gekennzeichnet, dass** die Senderate $a_v$ des Knotens v bestimmt wird: erstens durch mehrmaliges Messen der Anzahl von Sendungen, die während eines Zeitintervalls T vom Knoten v kommen, und zweitens durch Berechnen des gewichteten Mittels der letzten M gemessenen Anzahl von Sendungen, wobei $a_v$ gleich dem gewichteten Mittel ist.

9. Verfahren nach Anspruch 1 oder 2, **dadurch gekennzeichnet, dass** der zum Funktionieren als der Relaisknoten ausgewählte Knoten der Knoten M ist, der die längste Zeit $x_M$ als ein Relaisknoten bleiben sollte, gemäß optimalen Zeiten, die durch die lineare Programmierung bestimmt wurden.

10. Verfahren nach Anspruch 1 oder 2, **dadurch gekennzeichnet, dass** die Sendestärke eines jeden Masterdesign-Knotens u durch die folgenden Schritte angepasst wird:

> Knoten u sendet Signale an alle anderen Knoten;
> jeder der anderen Knoten meldet dem Knoten u einen empfangenen Signalstärkenindikator;
> Knoten u passt seine Sendeleistung so an, dass er alle anderen Knoten erreicht; falls seine Sendeleistung zu schwach ist, wird die Sendeleistung erhöht; falls seine Sendeleistung unnötig stark ist, wird die Sendeleistung reduziert.

11. Drahtloses Kommunikationssystem (100), n verschiedene Sendeknoten umfassend, unter denen w Masterdesign-Knoten (101, 102, 103) als ein Relaisknoten aktiviert werden können, wobei ein einzelner Relaisknoten zu einer gegebenen Zeit aktiv ist, alle von anderen Knoten (104a, 104b, 104c, 104d) erzeugten Nachrichten an den Relaisknoten gesendet werden, wobei das System **dadurch gekennzeichnet ist, dass** jeder Knoten mindestens ein Messmodul für verbleibendes Batterieniveau (801) umfasst, das das Batterieenergieniveau dieses Knotens an den Relaisknoten sendet, wobei jeder Masterdesign-Knoten auch ein Restriktionsmatrix-Berechnungsmodul (301) umfasst, das eine Restriktionsmatrix A berechnen kann, die mindestens von Sendeleistungswerten und Senderaten aller Sendeknoten abhängt, wobei ein Linearprogrammierungs-Lösungsmodul (302) fähig ist, aus der Restriktionsmatrix A und den verbleibenden Batterieenergieniveaus optimale Zeiten zu berechnen, zu denen jeder Masterdesign-Knoten als ein Relaisknoten bleiben sollte.

## Revendications

1. Procédé de sélection d'un noeud relais dans un système de communication sans fil (100) comprenant « n » noeuds de transmission distincts parmi lesquels « w » noeuds conçus en tant que maîtres (101, 102, 103) peuvent être activés en qualité de noeud de relais, un seul noeud relais étant actif à un instant donné, tous les signaux générés par d'autres noeuds (104a, 104b, 104c, 104d) étant envoyés au noeud de relais, ledit procédé étant **caractérisé en ce qu'**il comprend au moins les étapes ci-dessous consistant à :

déterminer le niveau d'énergie de batterie restant (202) de chaque noeud ;
résoudre (313) un programme linéaire maximisant la somme de temps «$x_u$» où chaque noeud conçu en tant que maître « u » doit rester le noeud relais sous des contraintes dépendant au moins de la puissance d'émission requise par chaque noeud « v » lorsqu'un noeud conçu en tant que maître « u » est le noeud de relais, aux débits de transmission de messages de chaque noeud, et auxdits niveaux d'énergie de batterie restants ;
selon les temps «$x_u$» trouvés précédemment, sélectionner (314) les noeuds de relais.

2. Procédé selon la revendication 1, **caractérisé en ce que** le programme linéaire résolu (313) maximise la somme des composantes de « x », « x » désignant le vecteur recherché de taille « w » de temps « $x_u$ » optimaux au cours desquels chaque noeud conçu en tant que maître « u » doit rester le noeud relais sous des contraintes $Ax \leq b$, $x \geq 0$, où A désigne une matrice (n par w) dépendant de la puissance d'émission requise par chaque noeud « v » lorsqu'un noeud « u » est le noeud de relais, la matrice A dépendant également des débits de transmission de messages de chaque noeud (201), « b » désignant le vecteur de contrainte de taille « n » dépendant desdits niveaux d'énergie de batterie restants.

3. Procédé selon la revendication 2, **caractérisé en ce qu'**il comprend en outre l'étape ci-après consistant à : pour chaque paire de noeuds (u, v) où le premier noeud « u » de la paire est le kième noeud conçu en tant que maître parmi les « w » noeuds conçu en tant que maîtres, déterminer la puissance d'émission $p_u(v)$ requise par le second noeud « v » pour atteindre le premier noeud « u », définir toutes les entrées de la kième colonne dans la matrice A sur une valeur proportionnelle à ladite puissance $p_u(v)$, les indices de colonne de la matrice A correspondant au noeud « u » étant sélectionnés en tant que le noeud de relais, les indices de rangée de la matrice A correspondant à un noeud « v » émettant vers le noeud de relais, « v » couvrant tous les noeuds, $p_u(u)$ étant déterminée en tant que la valeur $p_u(v)$ maximale, « v » couvrant tous les noeuds distincts du noeud « u ».

4. Procédé selon la revendication 2 ou 3, **caractérisé en ce qu'**il comprend en outre les étapes ci-après consistant à déterminer le débit de transmission « $a_v$ » de chaque noeud « v » émetteur, et à définir une quelconque entrée de la vième rangée de la matrice A sur une valeur proportionnelle audit débit de transmission « $a_v$ » lorsque la colonne de ladite entrée ne correspond pas à un noeud relais qui correspond au même noeud que le noeud « v ».

5. Procédé selon la revendication 4, **caractérisé en ce que** la matrice de contrainte est remplie de la façon suivante : toutes les entrées au niveau de la vième rangée et de la kième colonne, où la kième colonne correspond au kième noeud conçu en tant que maître « u » qui correspond au même noeud que le noeud « v » émetteur de la vième rangée, sont définies sur $\overline{p_u}(v)\sum_{i=1}^{n} a_i$, toutes les autres entrées étant définies sur la valeur $p_u(v).\ a_v$.

6. Procédé selon la revendication 5, **caractérisé en ce que** les valeurs d'intensité de puissance $p_u(v)$ sont estimées par les étapes suivantes consistant à, ou dans lesquelles :

chaque noeud esclave « i » signale sa position ($x_i$, $y_i$) et son intensité de puissance d'émission $p_m(i)$ au noeud maître « m » ;
le noeud maître « m » calcule la distance dist(m, i) le séparant de chaque noeud esclave « i » ;
pour chaque noeud « i », exprimer l'intensité $p_m(i)$ sous la forme d'une fonction f() de la distance dist(m, i) et de valeurs de constantes $\alpha_0$, ..., $\alpha_q$ ; le noeud maître « m » estime les valeurs de constantes pertinentes $\alpha_0$, $\alpha_1$, ..., $\alpha_q$, en faisant appel à une estimation d'erreur des moindres carrés ;
le noeud maître « m » calcule des valeurs approximatives pour $p_u(v)$ pour tous les noeuds « u » correspondant à des noeuds conçus en tant que maîtres, u≠m et u≠v, toutes les valeurs « v » allant de 1 à n, en utilisant les constantes estimées $\alpha_0$, ..., $\alpha_q$ et les relations approximatives $p_v(v) \approx$ f(dist(u, v), $\alpha_0$, ..., $\alpha_q$).

7. Procédé selon la revendication 1 ou 2, **caractérisé en ce que** la résolution de programme linéaire est répétée avec des entrées renouvelées après un intervalle de temps U, U représentant une fraction du temps $x_m$ où le noeud relais en cours « m » doit rester un noeud de relais.

8. Procédé selon la revendication 1 ou 2, **caractérisé en ce que** le débit de transmission « $a_v$ » du noeud « v » est déterminé : en premier lieu, en mesurant plusieurs fois le nombre de transmissions en provenance dudit noeud « v » au cours d'un intervalle de temps T, et en second lieu, en calculant la moyenne pondérée du dernier nombre M mesuré de transmissions, le débit de transmission « $a_v$ » étant égal à ladite moyenne pondérée.

9. Procédé selon la revendication 1 ou 2, **caractérisé en ce que** le noeud choisi pour opérer en qualité de noeud relais est le noeud M qui doit rester le temps le plus long « $x_M$ » en qualité de noeud de relais, selon des temps optimaux déterminés à partir du programme linéaire.

10. Procédé selon la revendication 1 ou 2, **caractérisé en ce que** l'intensité de transmission de chaque noeud conçu en tant que maître « u » est adaptée à travers les étapes ci-dessous dans lesquelles :

 le noeud « u » envoie des signaux à tous les autres noeuds ;
 chacun des autres noeuds signale un indicateur d'intensité de signal reçu au noeud «u»;
 le noeud « u » adapte sa puissance d'émission de manière à atteindre tous les autres noeuds ; si sa puissance d'émission est trop faible, la puissance d'émission est augmentée, si sa puissance d'émission est inutilement élevée, la puissance d'émission est diminuée.

11. Système de communication sans fil (100) comprenant une pluralité « n » de noeuds émetteurs parmi lesquels « w » noeuds conçus en tant que maîtres (101, 102, 103) peuvent être activés en tant que noeud de relais, un seul noeud relais étant actif à un instant donné, tous les messages générés par d'autres noeuds (104a, 104b, 104c, 104d) étant envoyés au noeud de relais, le système étant **caractérisé en ce que** chaque noeud comprend au moins un module de mesure de niveau de batterie restant (801) qui envoie le niveau d'énergie de batterie de ce noeud au noeud de relais, chaque noeud conçu en tant que maître comprenant également un module de calcul de matrice de contrainte (301) apte à calculer une matrice de contrainte A dépendant au moins de valeurs de puissance d'émission et de débits de transmission de tous les noeuds émetteurs, un module de résolution de programme linéaire (302) étant apte à calculer des temps optimaux au cours desquels chaque noeud conçu en tant que maître doit rester un noeud de relais, à partir de ladite matrice de contrainte A et desdits niveaux d'énergie de batterie restants.

FIG.1a

FIG.1b

FIG.2

FIG.3

FIG.4

FIG.5

FIG.6

$\alpha_o, \ldots, \alpha_q$

Dist (m,i)

FIG.7

FIG.8

FIG.9

FIG.10

**EP 2 200 371 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5551066 A

**Non-patent literature cited in the description**

- **I. KANG ; R. POOVENDRAN.** Maximizing Network Lifetime of Broadcasting over Wireless Stationary Ad Hoc networks. *Mobile Networks and Applications,* 2005, vol. 10, 879-89
- **C.P. LOW ; L.W. GOH.** On the construction of energy-efficient maximum residual battery capacity broadcast trees in static ad-hoc wireless networks. *Computer Communications,* 2005, vol. 29, 93-103
- **J. PARK ; S. SAHNI.** alternative heuristic for determination of the tree with maximum 'critical energy' (minimum residual energy). *3rd ACS/IEEE International Conference on Computer Systems and Applications,* vol. 2005, 1-8
- **W. LIANG.** Constructing minimum-energy broadcast trees in wireless ad hoc networks. *Proceedings of the International Symposium on Mobile Ad Hoc Networking and Computing (MobiHoc),* 2002, 112-122
- **M. CAGALJ ; J. HUBAUX ; C.ENZ.** Proceedings of the Annual International Conference on Mobile Computing and Networking. *MOBICOM,* 2002, 172-182
- **J.E. WIESELTHIER ; G.D. NGUYEN ; A. EPREMIDES.** Broadcast Incremental Power. *Proceedings - IEEE INFOCOM,* 2000, vol. 2, 585-594
- Resource management in energy-limited, bandwidth-limited, transceiver-limited wireless networks for session based multicasting. *Computer Networks,* 2002, vol. 39 (2), 113-131
- **R. WATTENHOFER ; Z. ZOLLING.** A practical topology control algorithm for ad-hoc networks. *Proceedings - International Parallel and Distributed Processing Symposium (IPDPS),* 2004, vol. 18, 2969-2976
- **G. CALINESCU ; S. KAPOOR ; A. OLSHEVSKY ; A. ZELIKOVSKY.** disclose a method where the lifetime of the network is maximized taking into account the energy cost to maintain the topology, in Lecture Notes in Computer Science. *Network lifetime and power assignment in ad hoc wireless networks,* 2003, vol. 2832, 114-126